# EUROPÄISCHE PATENTSCHRIFT

(11) **EP 0 891 843 B1**
(45) Veröffentlichungstag und Bekanntmachung des Hinweises auf die Patenterteilung: **14.08.2002**
(21) Anmeldenummer: 98109392.5
(22) Anmeldetag: 23.05.1998
(51) Int. Cl.: B26D 7/10, B26F 1/14, B26D 7/02, B26D 7/27, B29C 67/00

(54) **Schneidwerkzeug und Verfahren zum Lochen von Werkstücken aus thermoplastischem Kunststoff**
Cutting tool and method for perforating thermoplastic workpieces
Outil et procédé pour poinçonner des pièces en matière thermoplastique

(30) Priorität: 17.07.1997 DE 19730859
(43) Veröffentlichungstag der Anmeldung: 20.01.1999
(73) Patentinhaber: Decoma (Germany) GmbH, 66280 Sulzbach (DE)
(72) Erfinder: Hüttner, Manfred, 73252 Lenningen (DE)
(74) Vertreter: Pfiz, Thomas, Dr.

(56) Entgegenhaltungen:
- WO-A-94/00278
- GB-A- 1 019 301
- US-A- 2 352 194
- US-A- 2 364 834
- US-A- 2 633 441
- US-A- 3 075 573
- US-A- 3 078 574
- US-A- 4 574 445
- US-A- 5 451 288
- PATENT ABSTRACTS OF JAPAN vol. 006, no. 050 (M-120), 3. April 1982 (1982-04-03) & JP 56 165531 A (MASPRO DENKOH CORP), 19. Dezember 1981 (1981-12-19)
- PATENT ABSTRACTS OF JAPAN vol. 005, no. 199 (M-102), 17. Dezember 1981 (1981-12-17) & JP 56 117836 A (TERADA ISAO), 16. September 1981 (1981-09-16)

## Beschreibung

Die Erfindung betrifft ein Schneidwerkzeug zum Lochen von Werkstücken aus thermoplastischem Kunststoff nach dem Oberbegriff des Anspruchs 1. Die Erfindung betrifft ferner ein Verfahren zum Lochen von Werkstücken aus thermoplastischem Kunststoff nach dem Oberbegriff des Anspruchs 12. Eine derartiges Schneidwerkzeug und Verfahren gehen beispielsweise aus der US 3075573-A hervor.

Bei Kraftfahrzeugen werden häufig flächige, dünnwandige Formteile aus thermoplastischem Kunststoff, welche gegebenenfalls durch Glasfasern oder Füllstoffe verstärkt sind, als Karosserieteile angebaut. Zur Aufnahme von Funktionseinheiten wie Näherungssensoren oder Seitenmarkierungselementen müssen in die Formteile Öffnungen eingebracht werden, wofür in automatisierten Fertigungsabläufen Schneidwerkzeuge der eingangs angegebenen Art Verwendung finden. Dabei wird jedoch als nachteilig empfunden, daß an den beim Scherschneiden entstehenden Schnittflächen durch Kantenabzug, Grat- und Rißbildung Formfehler auftreten, die an der Sichtseite von Karosserieflächen, die ein einheitliches Erscheinungsbild vermitteln sollen, vor allem aus ästhetischen Gründen nicht akzeptabel sind. Solche fehlerhaften Schnittkanten lassen sich durch Lackieren nur unzureichend kaschieren und werden außerdem bei Waschvorgängen leicht beschädigt, so daß dort das Grundmaterial sichtbar hervortritt. Eine Nachbearbeitung der Schnittkante beispielsweise durch Polieren oder mehrstufige Sonderschneidverfahren würde einen besonders in der Großserienfertigung nachteiligen zusätzlichen Arbeitsaufwand erfordern und zudem nicht ein stets gleichbleibendes Schnittbild gewährleisten.

Ausgehend hiervon liegt der Erfindung die Aufgabe zugrunde, ein Schneidwerkzeug und ein Verfahren bereitzustellen, womit bei geringem Fertigungsaufwand glatte, gratfreie Schnittflächen beim Lochen von Werkstücken aus thermoplastischem Kunststoff herstellbar sind.

Diese Aufgabe wird gemäß der Erfindung durch die Merkmalskombinationen der unabhängigen Patentansprüche 1 und 12 gelöst. Vorteilhafte Ausgestaltungen und Weiterbildungen der Erfindung ergeben sich aus den abhängigen Ansprüchen.

Die Erfindung geht von dem Gedanken aus, die Schnittkante des erzeugten Wanddurchbruchs ohne Veränderung der Einspannung des Werkstücks durch eine erwärmte Warmformfläche zu plastifizieren und unter Ausübung einer Anpreßkraft umzuformen. Um dies zu ermöglichen, wird bei einem Schneidwerkzeug vorgeschlagen, daß die Warmformfläche entgegen des Schneidrichtung im Abstand von der Schneide angeordnet ist und am Ende des Arbeitshubs gegen die ihr zugewandte Schnittkante des Wanddurchbruchs anpreßbar ist. Damit läßt sich die Schnittfläche des Wanddurchbruchs entsprechend der Ringkontur der Warmformfläche umformen und insbesondere die der Warmformfläche zugewandte Schnittkante abrunden, wobei bei dem so hergestellten Wanddurchbruch der optische Eindruck einer Urformgebung vermittelt wird. Da der Schneidvorgang und die Warmformung in einem Hub erfolgen, lassen sich besonders kurze Fertigungszyklen erreichen.

Vorteilhafterweise weist der Lochstempel einen an seinem freien Ende die Schneide tragenden zylindrischen Schneidteil und eine koaxial mit dem Schneidteil angeordnete und glatt in dessen Mantelfläche übergehende, die Warmformfläche bildende Ringschulter auf. Durch den beim Warmformen in dem Werkstück verbleibenden Schneidteil wird eine stets gleichbleibende Zentrierung der Warmformfläche sichergestellt. Durch den glatten Flächenübergang zwischen Schneidteil und Warmformfläche kann die Schnittkante ohne Randabzeichnung abgerundet werden. Dabei ist es von Vorteil, wenn die Warmformfläche in Schneidrichtung gesehen eine konisch sich verjüngende Außenringfläche und eine daran angrenzende, mit konkaver Krümmung sich verjüngende Innenringfläche aufweist. Während die Innenringfläche die Schnittflächenumformung bewirkt, ist durch die Konizität der Außenringfläche gewährleistet, daß sich der Außenrand der Ringschulter nicht in das Werkstück eindrückt. Um zur Fixierung eines Bauteils in dem Wanddurchbruch noch eine ausreichend große zylindrische Randfläche an dem Wanddurchbruch zur Verfügung zu haben, ist es von Vorteil, wenn der Krümmungsradius der Innenringfläche in Schneidrichtung gesehen jedenfalls kleiner als die Wandstärke, vorzugsweise kleiner als die halbe Wandstärke des den Wanddurchbruch begrenzenden Werkstücksrandes ist.

Vorteilhafterweise weist die Heizvorrichtung ein elektrisches Heizelement auf, das in einer Axialbohrung eines über die Ringschulter einstückig an den Schneidteil anschließenden Schaftteils des Lochstempels angeordnet ist. Damit wird aufgrund der konzentrischen Anordnung von Heizelement und Ringschulter in Umfangsrichtung eine gleichmäßige Erwärmung der Ringschulter erreicht, wobei sich ein Temperaturgradient in axialer Richtung zu dem Schneidteil hin einstellt, so daß dessen Temperatur unter der Erweichungstemperatur des Werkstücks gehalten werden kann.

Um die Temperatur der Warmformfläche auf einen vorgegebenen Wert einstellen zu können, ist es von Vorteil, wenn die Heizvorrichtung einen mit der Warmformfläche in thermischem Kontakt stehenden Temperaturfühler und einen eingangsseitig mit dem Temperaturfühler und ausgangsseitig mit einem die Warmformfläche erwärmenden Heizelement verbundenen Temperaturregler aufweist.

Gemäß einer weiteren vorteilhaften Ausgestaltung der Erfindung ist an der freien Stirnseite des Lochstempels eine Vertiefung ausgebildet, über welche eine umlaufende, die Schneide des Lochstempels bildende Schneidkante in Schneidrichtung übersteht. Durch diese Schneidengeometrie wird bewirkt, daß der Kanteneinzug an der Schnittkante verringert wird, und daß das beim Schneidvorgang verdrängte Material teilweise in die Vertiefung nach innen abfließen kann. Zudem wird aufgrund der schärferen Schneide die erforderliche Schneidkraft verringert.

Um die Lage des Werkstücks beim Schneidvorgang sicher festzulegen, wird das Werkstück durch eine Niederhalterplatte gegen die Schneidplatte angepreßt, wobei die Niederhalterplatte an dem Lochstempel begrenzt verschiebbar gehalten ist. Dabei ist es zur Einstellung der Anpreßkraft der Warmformfläche von Vorteil, wenn der Lochstempel entgegen der Kraft mindestens einer vorgespannten Rückstellfeder durch einen Querdurchbruch der Niederhalterplatte hindurch verschiebbar ist. Die Niederhalterplatte kann zugleich als Abstreifer dienen, wenn das freie Ende des Lochstempels am Beginn des Arbeitshubs bzw. Ende des Rückstellhubs in den Querdurchbruch der Niederhalterplatte zurückgezogen ist. Eine in baulicher Hinsicht besonders vorteilhafte Ausgestaltung sieht vor, daß der Lochstempel einen Flanschbund aufweist, daß mindestens drei in Umfangsrichtung des Flanschbundes angeordnete und an diesem in Schneidrichtung begrenzt verschiebbar gelagerte Führungshülsen an der Niederhalterplatte starr befestigt sind und daß zwischen dem Flanschbund und der Niederhalterplatte die Führungshülsen umgreifende Schraubendruckfedern vorgespannt sind.

Um eine besonders genaue Führung von Lochstempel und Schneidplatte sicherzustellen und damit auch eine hohe Standmenge zu erreichen, kann ein Säulengestell vorgesehen sein, das eine die Schneidplatte tragende feststehende Aufspannplatte und eine in einer Hubbewegung gegenüber der Aufspannplatte bewegliche, den Lochstempel tragende Anpreßplatte aufweist.

In verfahrensmäßiger Hinsicht wird die eingangs genannte Aufgabe gelöst durch die Merkmale des Anspruchs 12.

Im folgenden wird die Erfindung anhand eines in der Zeichnung in schematischer Weise dargestellten Ausführungsbeispiels näher erläutert. Es zeigen:
- Fig. 1: und 2 ein Schneidwerkzeug zum Lochen von Werkstücken aus thermoplastischem Kunststoff in der Ausgangs- und Endstellung eines Arbeitshubs in einer teilweise geschnittenen Seitenansicht;
- Fig. 3: eine vergrößerte Darstellung des mit einem strichpunktierten Kreis markierten Bereichs der Fig. 2.

Das in der Zeichnung dargestellte Schneidwerkzeug besteht im wesentlichen aus einem Lochstempel 10, einer Heizeinrichtung 12, einer Schneidplatte 14, einer Niederhalterplatte 16 und einem Säulengestell 18 zum Einbau des Lochstempels 10 und der Schneidplatte 14. Das Schneidwerkzeug dient zum Lochen eines aus thermoplastischem Kunststoff bestehenden flächigen Werkstücks 20, wobei die Schnittfläche des in dem Werkstück 20 erzeugten Wanddurchbruchs 21 im Bereich der dem Lochstempel zugewandten Schnittkante 22 unter Wärmeeinwirkung umgeformt wird.

Der Lochstempel 10 weist einen an seinem freien Ende eine Schneide 24 tragenden zylindrischen Schneidteil 26 und einen koaxial mit dem Schneidteil 26 angeordneten und gegenüber diesem einen größeren Durchmesser besitzenden, über einen Flanschbund 29 abgestuften zylindrischen Schaftteil 28 auf. Grundsätzlich können auch von der Kreisform abweichende Stempelquerschnitte entsprechend einer gewünschten Lochform vorgesehen sein. Die Schneide 24 ist durch eine an dem Schneidteil 26 stirnseitig umlaufende Schneidkante 30 gebildet, die über eine Vertiefung 32 bzw. Auskehlung der Stirnfläche des Schneidteils 26 randseitig axial übersteht.

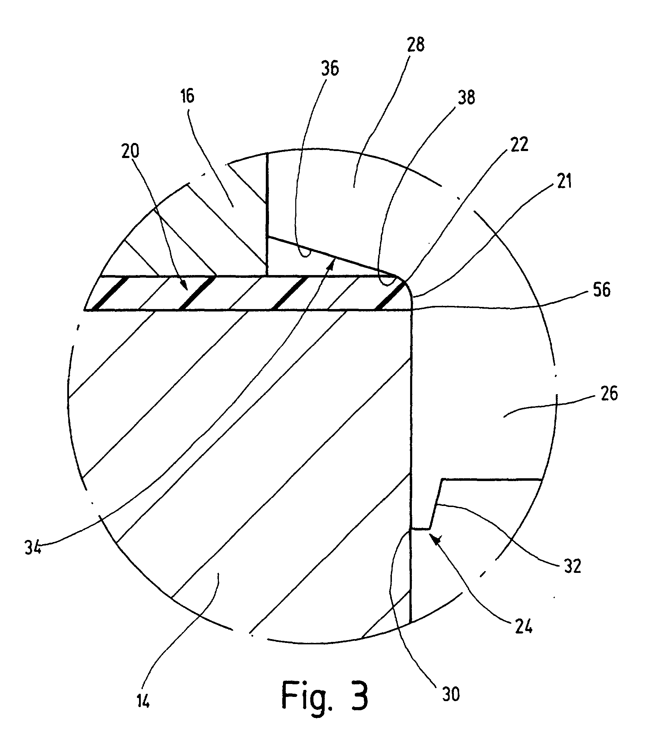

Eine den Schneidteil 26 mit dem Schaftteil 28 mantelseitig verbindende Ringschulter 34 dient als Warmformfläche zur Umformung der Schneidkante 22. Es versteht sich, daß die Ringschulter grundsätzlich auch eine von der Kreisform abweichende, beispielsweise ovale oder mehreckige Ringform aufweisen kann, jedenfalls aber in sich geschlossen ist. Wie insbesondere aus Fig. 3 ersichtlich, verjüngt sich die Ringschulter 34 bzw. Warmformfläche in axialer Richtung des Lochstempels 10 gesehen ausgehend von dem Schaftteil 28 an einer Außenringfläche 36 zunächst konisch und geht dann über eine konkav gekrümmte Innenringfläche 38 glatt in die Mantelfläche des Schneidteils 26 über.

Die Heizvorrichtung 12 umfaßt eine elektrische Widerstands-Heizpatrone 40, die in eine Sackbohrung 42 eingesetzt ist, welche koaxial in dem Schaftteil 28 verläuft und an dessen Stirnseite randoffen ist. Zur Wärmeisolierung ist die Stirnseite des Schaftteils 28 durch eine Isolierscheibe 44 überdeckt, durch welche eine mit Heizstrom beaufschlagbare Anschlußleitung 46 radial hindurchgeführt ist. Grundsätzlich kann es vorgesehen sein, daß die Heizvorrichtung 12 eine nicht gezeigte Temperaturregeleinrichtung umfaßt. In jedem Fall wird durch die koaxiale Anordnung der Heizpatrone 40 in dem Schaftteil 28 sichergestellt, daß die über Wärmeleitung thermisch mit der Heizpatrone 40 gekoppelte Ringschulter 34 in Umfangsrichtung gleichmäßig erwärmt wird, wobei sich ein Temperaturgradient zu dem Schneidteil 26 hin einstellt.

An der Stirnseite seines Schaftteils 28 ist der Lochstempel 10 über die Isolierscheibe 44 starr mit einer oberen Anpreßplatte 48 des Säulengestells 18 verbunden.

Die Anpreßplatte 48 ist über mehrere in Umfangsrichtung des Lochstempels 10 verteilt angeordnete Säulenführungen 50 in einer Hubbewegung gegenüber einer feststehenden Aufspannplatte 52 des Säulengestells 18 beweglich. Die fest mit der Aufspannplatte 52 verbundene Schneidplatte 14 weist einen mit dem Schneidteil 26 fluchtenden Durchbruch 54 auf, dessen umlaufende obere Schneidkante 56 mit der Schneidkante 30 des Lochstempels 10 in bekannter Weise in einem Scherschneidvorgang zusammenwirkt.

Die Niederhalterplatte 16 ist an dem Lochstempel 10 begrenzt verschiebbar gelagert. Hierzu weist die Niederhalterplatte 16 einen Querdurchbruch 58 auf, welcher eine Rundführung für den Schaftteil 28 bildet. Des weiteren sind drei in Umfangsrichtung des Lochstempels 10 im gleichen Winkelabstand voneinander angeordnete Führungshülsen 60 vorgesehen, welche mittels Schraube 62 an der Niederhalterplatte 16 senkrecht abstehend starr befestigt sind und durch eine Führungsbohrung 64 des Flanschbundes 29 hindurchgreifen. Dabei begrenzt eine am freien Ende der Führungshülse 60 mittels der Schraube 62 gehaltene Anschlagscheibe 66 den Führungsweg, so daß die Niederhalterplatte 16 stets an dem Schaftteil 28 gelagert bleibt. Um das Werkstück 20 gegenüber der Schneidplatte 14 einzuspannen, sind Schraubendruckfedern 68 vorgesehen, die an der Mantelfläche jeweils einer der Führungshülsen 60 knicksicher gelagert und zwischen den einander zugewandten Flächen des Flanschbundes 29 und der Niederhalterplatte 16 vorgespannt ist.

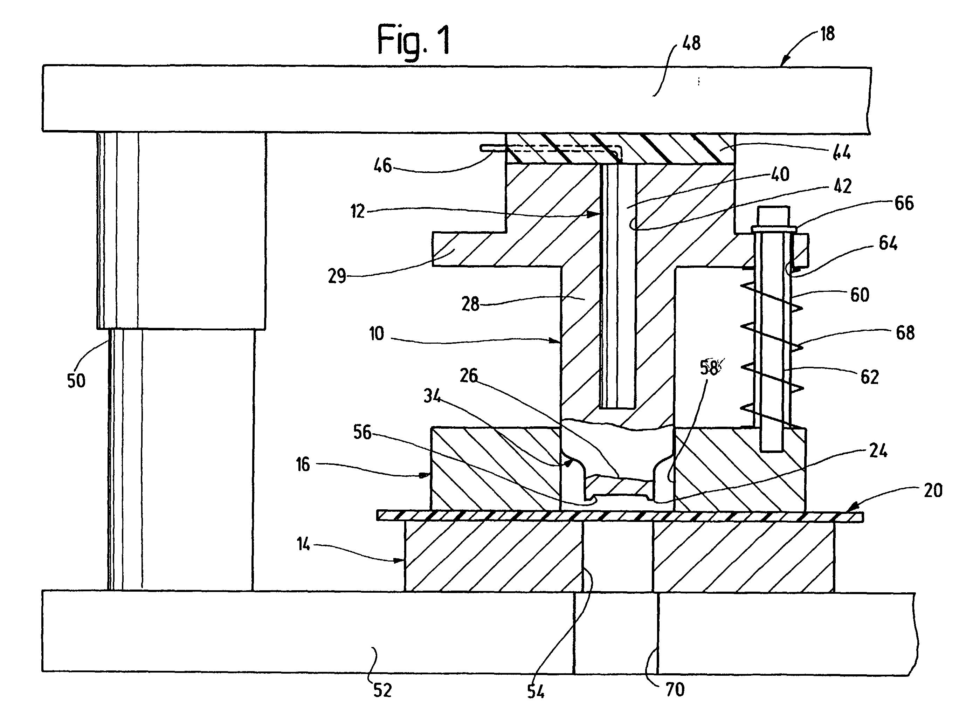

Zum Lochen des Werkstücks 20 wird der Lochstempel 10 in einem Axialhub gegenüber der Schneidplatte 14 bewegt, wobei das Werkstück 20 mit seiner Sicht- bzw. Außenseite der Stirnfläche des Lochstempels 10 zugewandt ist. Die Hubbewegung des Lochstempels 10 läßt sich in einen in Schneidrichtung, d.h. senkrecht gegen die Schneidplatte 14 gerichteten Arbeitshub und einen Rückhub unterteilen. Beim Arbeitshub kommt die Schneidkante 24 des Lochstempels 10 ausgehend aus der in Fig. 1 gezeigten, in den Querdurchbruch 58 der Niederhalterplatte 16 zurückgezogenen Ausgangsstellung mit der Schneidkante 56 der Schneidplatte 14 in Eingriff, wobei der dabei ausgescherte Teil des Werkstücks 20 über den Durchbruch 54 der Schneidplatte 14 und einen daran anschließenden Durchbruch 70 der Aufspannplatte 52 ausgeworfen wird.

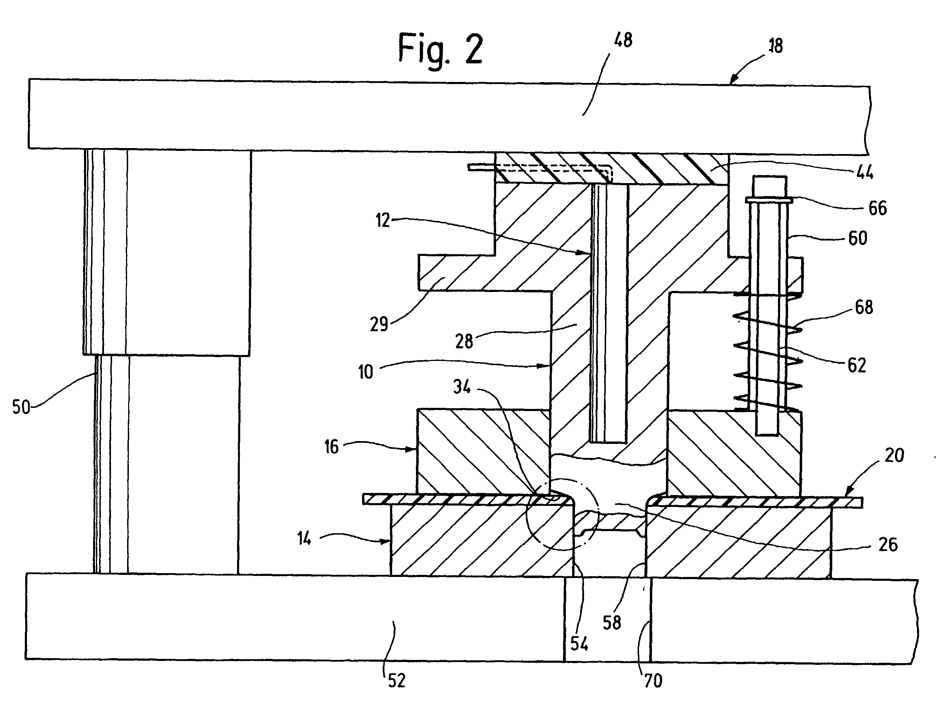

In der in Fig. 2 und 3 gezeigten Endstellung des Arbeitshubs wird die Ringschulter 34 mit ihrer Innenringfläche 38 gegen die ihr zugewandte Schnittkante 22 des Werkstücks 20 angepreßt. Dadurch wird die Schnittkante 22 unter Kontakterwärmung plastifiziert und entsprechend der Kontur der Innenringfläche 38 umgeformt. Der Krümmungsradius der Innenringfläche 38 ist dabei zweckmäßig kleiner als die Hälfte der Wandstärke des Werkstücks 20 gewählt, so daß noch eine ausreichend bruchfester zylindrischer Schnittflächenbereich erhalten bleibt. In Abhängigkeit von der Zykluszeit der Hubbewegung und den Werkstoffeigenschaften des Werkstücks 20 können die Heizleistung der Heizpatrone 40 und/oder die durch die Vorspannung der Rückstellfedern 68 einstellbare Flächenpreßkraft der Ringschulter 34 entsprechend gewählt werden, um eine optimale Formgestaltung der Schnittkante 22 zu erreichen.

Zusammenfassend ist folgendes festzuhalten: Die Erfindung betrifft ein Schneidwerkzeug sowie ein Verfahren zum Lochen von aus thermoplastischem Kunststoff bestehenden Werkstücken, insbesondere flächigen Kraftfahrzeug-Anbauteilen. Ein Lochstempel 10 ist in einem Säulengestell 18 mit einer Schneidplatte 14 in einem Arbeitshub in Eingriff bringbar, wobei ein Wanddurchbruch 21 in dem Werkstück 20 erzeugt wird. Um im selben Arbeitsgang eine glatte, abrißfreie Schnittkante 22 herzustellen, weist der Lochstempel 10 eine entgegen der Schneid- bzw. Arbeitshubrichtung im Abstand von seiner Schneide 24 angeordnete und über diese quer zur Schneidrichtung hinausragende Warmformfläche 34 auf, die mittels einer Heizvorrichtung 12 erwärmbar und am Ende des Arbeitshubs gegen die ihr zugewandte Schnittkante 22 des Wanddurchbruchs 21 anpreßbar ist.

## Patentansprüche

1. Schneidwerkzeug zum Lochen von Werkstücken aus thermoplastischem Kunststoff, mit einem eine stirnseitig umlaufende Schneide (24) aufweisenden, in einem Arbeitshub mit einer Schneidplatte (14) in Eingriff bringbaren und dabei das zwischen seiner Schneide (24) und der Schneidplatte (14) angeordnete Werkstück (20) unter Erzeugung eines Wanddurchbruchs (21) in Schneidrichtung durchdringenden Lochstempel (10), welcher eine quer zur Schneidrichtung hinausragende, mittels einer Heizvorrichtung (12) erwärmbare Warmformfläche (34) aufweist, **dadurch gekennzeichnet, daß** die Warmformfläche (34) entgegen der Schneidrichtung im Abstand von der Schneide (24) angeordnet ist und am Ende des Arbeitshubs gegen die ihr zugewandte Schnittkante (22) des Wanddurchbruchs (21) anpreßbar ist.

2. Schneidwerkzeug nach Anspruch 1, **dadurch gekennzeichnet, daß** der Lochstempel (10) einen an seinem freien Ende die Schneide (24) tragenden zylindrischen Schneidteil (26) und eine koaxial mit dem Schneidteil (26) angeordnete und glatt in dessen Mantelfläche übergehende, die Warmformfläche bildende Ringschulter (34) aufweist.

3. Schneidwerkzeug nach Anspruch 1 oder 2, **dadurch gekennzeichnet, daß** die Warmformfläche (34) in Schneidrichtung gesehen eine konisch sich verjüngende Außenringfläche (36) und eine daran angrenzende, mit konkaver Krümmung sich verjüngende Innenringfläche (38) aufweist.

4. Schneidwerkzeug nach Anspruch 3, **dadurch gekennzeichnet, daß** der Krümmungsradius der Innenringfläche (38) in Schneidrichtung zumindest kleiner als die Wandstärke, vorzugsweise kleiner als die halbe Wandstärke des den Wanddurchbruch (21) begrenzenden Werkstückrandes ist.

5. Schneidwerkzeug nach einem der Ansprüche 2 bis 4, **dadurch gekennzeichnet, daß** die Heizvorrichtung (12) ein elektrisches Heizelement (40) aufweist, das in einer Axialbohrung (42) eines über die Ringschulter (34) an den Schneidteil (26) einstückig anschließenden Schaftteils (28) des Lochstempels (10) angeordnet ist.

6. Schneidwerkzeug nach einem der Ansprüche 1 bis 5, **dadurch gekennzeichnet, daß** die Heizvorrichtung (12) einen mit der Warmformfläche (34) in thermischem Kontakt stehenden Temperaturfühler und einen eingangsseitig mit dem Temperaturfühler und ausgangsseitig mit einem die Warmformfläche (34) erwärmenden Heizelement (40) verbundenen Temperaturregler aufweist.

7. Schneidwerkzeug nach einem der Ansprüche 1 bis 6, **gekennzeichnet durch** eine an der freien Stirnseite des Lochstempels (10) ausgebildete Vertiefung (56), über welche eine umlaufende, die Schneide (24) des Lochstempels (10) bildende Schneidkante (30) in Schneidrichtung übersteht.

8. Schneidwerkzeug nach einem der Ansprüche 1 bis 7, **dadurch gekennzeichnet, daß** das Werkstück (20) durch eine Niederhalterplatte (16) gegen die Schneidplatte (14) anpreßbar ist, wobei die Niederhalterplatte (16) an dem Lochstempel (10) begrenzt verschiebbar gehalten ist.

9. Schneidwerkzeug nach Anspruch 8, **dadurch gekennzeichnet, daß** der Lochstempel (10) entgegen der Kraft mindestens einer vorgespannten Rückstellfeder (68) durch einen Querdurchbruch (58) der Niederhalterplatte (16) hindurch verschiebbar ist, wobei das freie Ende des Lochstempels (10) am Beginn des Arbeitshubs in dem Querdurchbruch (58) der Niederhalterplatte (16) angeordnet ist.

10. Schneidwerkzeug nach einem der Ansprüche 8 oder 9, **dadurch gekennzeichnet, daß** der Lochstempel (10) einen Flanschbund (29) aufweist, daß mindestens drei in Umfangsrichtung des Flanschbundes (29) verteilt angeordnete und an diesem in axialer Richtung des Lochstempels (10) begrenzt verschiebbar gelagerte Führungshülsen (60) an der Niederhalterplatte (16) starr befestigt sind, und daß zwischen dem Flanschbund (29) und der Niederhalterplatte (16) die Führungshülsen (60) umgreifende Schraubendruckfedern (68) vorgespannt sind.

11. Schneidwerkzeug nach einem der Ansprüche 1 bis 10, **gekennzeichnet durch** ein Säulengestell (18), das eine die Schneidplatte (14) tragende feststehende Aufspannplatte (52) und eine in einer Hubbewegung gegenüber der Aufspannplatte (52) bewegliche, den Lochstempel (10) tragende Preßplatte (48) aufweist.

12. Verfahren zum Lochen von Werkstücken aus thermoplastischem Kunststoff, bei welchem das Werkstück (20) zwischen einem Lochstempel (10) und einer Schneidplatte (14) eines Schneidwerkzeugs eingespannt und der Lochstempel (10) in einem Arbeitshub mit der Schneidplatte (14) unter Erzeugung eines Wanddurchbruchs (21) in dem Werkstück (20) in Eingriff gebracht wird, wobei eine quer zur Schneidrichtung hinausragende Warmformfläche (34) des Lochstempels (10) mittels einer Heizvorrichtung (12) erwärmt wird, **dadurch gekennzeichnet, daß** die entgegen der Schneidrichtung im Abstand von der Schneide (24) angeordnete Warmformfläche (34) am Ende des Arbeitshubs gegen die ihr zugewandte Schnittkante (22) des Wanddurchbruchs (21) angepreßt wird, wobei die Schnittkante (22) entsprechend der Kontur der Warmformfläche (34) umgeformt wird.

## Claims

1. Cutting tool for perforating workpieces made of thermoplastic, comprising a punch (10), which has a front annular cutter (24) and is bringable in a working stroke into engagement with a blanking die (14) and in the process penetrates the workpiece (20) disposed between its cutter (24) and the blanking die (14) so as to produce a wall breach (21) in cutting direction and which has a thermoforming surface (34), which projects at right angles to the cutting direction and is heatable by means of a heating apparatus (12), **characterized in that** the thermoforming surface (34) is disposed at a distance counter to cutting direction from the cutter (24) and at the end of the working stroke is pressable against the cut edge (22) of the wall breach (21) directed towards it.

2. Cutting tool according to claim 1, **characterized in that** the punch (10) comprises a cylindrical cutting part (26), which at its free end carries the cutter (24), and an annular shoulder (34), which is disposed coaxially with the cutting part (26) and verges smoothly into the latter's lateral surface and which forms the thermoforming surface.

3. Cutting tool according to claim 1 or 2, **characterized in that** the thermoforming surface (34), viewed in cutting direction, comprises a conically tapering outer annular surface (36) adjoined by an inner annular surface (38), which tapers with a concave curvature.

4. Cutting tool according to claim 3, **characterized in that** the radius of curvature of the inner annular surface (38) is in cutting direction at least smaller than the wall thickness, preferably smaller than half the wall thickness of the workpiece edge delimiting the wall breach (21).

5. Cutting tool according to one of claims 2 to 4, **characterized in that** the heating apparatus (12) comprises an electric heating element (40), which is disposed in an axial bore (42) of a shank part (28) of the punch (10), which shank part is integrally connected by the annular shoulder (34) to the cutting part (26).

6. Cutting tool according to one of claims 1 to 5, **characterized in that** the heating apparatus (12) comprises a temperature detector, which is in thermal contact with the thermoforming surface (34), and a temperature controller, which is connected at the input side to the temperature detector and at the output side to a heating element (40), which heats the thermoforming surface (34).

7. Cutting tool according to one of claims 1 to 6, **characterized by** a recess (56), which is formed in the free end face of the punch (10) and beyond which an annular cutting edge (30), which forms the cutter (24) of the punch (10), projects in cutting direction.

8. Cutting tool according to one of claims 1 to 7, **characterized in that** the workpiece (20) is pressable against the blanking die (14) by means of a holding-down plate (16), wherein the holding-down plate (16) is supported on the punch (10) so as to be displaceable to a limited extent.

9. Cutting tool according to claim 8, **characterized in that** the punch (10) is displaceable counter to the force of at least one biased restoring spring (68) through a transverse hole (58) of the holding-down plate (16), wherein the free end of the punch (10) at the beginning of the working stroke is disposed in the transverse hole (58) of the holding-down plate (16).

10. Cutting tool according to one of claims 8 or 9, **characterized in that** the punch (10) has a flanged collar (29), that at least three guide sleeves (60), which are arranged distributed in peripheral direction of the flanged collar (29) and supported on the latter so as to be displaceable to a limited extent in axial direction of the punch (10), are rigidly fastened to the holding-down plate (16), and that helical compression springs (68) embracing the guide sleeves (60) are biased between the flanged collar (29) and the holding-down plate (16).

11. Cutting tool according to one of claims 1 to 10, **characterized by** a die set (18) comprising a fixed chucking plate (52), which carries the blanking die (14), and a press plate (48), which is movable in a lifting motion relative to the chucking plate (52) and carries the punch (10).

12. Method of perforating workpieces made of thermoplastic, whereby the workpiece (20) is clamped in between a punch (10) and a blanking die (14) of a cutting tool and the punch (10) in a working stroke is brought into engagement with the blanking die (14) so as to produce a wall breach (21) in the workpiece (20), wherein a thermoforming surface (34) of the punch (10) projecting at right angles to the cutting direction is heated by means of a heating apparatus (12), **characterized in that** the thermoforming surface (34), which is disposed at a distance counter to cutting direction from the cutter (24), at the end of the working stroke is pressed against the cut edge (22) of the wall breach (21) directed towards it, wherein the cut edge (22) is reshaped in accordance with the contour of the thermoforming surface (34).

## Revendications

1. Outil de découpage pour poinçonner des pièces en matière thermoplastique, comprenant un poinçon (10) présentant un tranchant circulaire frontal (24), qu'une course de travail permet de mettre en prise avec une matrice de découpage (14) afin de transpercer la pièce (20) située entre le tranchant (24) et la matrice de découpage (14) dans le sens de coupe et d'y réaliser une ouverture (21), lequel poinçon présente également une surface de thermoformage (34) faisant saillie transversalement par rapport au sens de coupe et pouvant être chauffée par un dispositif de chauffe (12), **caractérisé en ce que** la surface de thermoformage (34) est distante du tranchant (24) dans le sens inverse au sens de coupe et peut être appuyée à la fin de la course de travail contre l'arête de coupe (22) de l'ouverture (21) qui est tournée vers elle.

2. Outil de découpage selon la revendication 1, **caractérisé en ce que** le poinçon (10) présente un élément de coupe (26) cylindrique portant le tranchant (24) à son extrémité libre et un épaulement annulaire (34) constituant la surface de thermoformage, qui est disposé de façon coaxiale par rapport à l'élément de coupe (26) et dont la transition vers la surface latérale de ce dernier est plane.

3. Outil de découpage selon la revendication 1 ou 2, **caractérisé en ce que** la surface de thermoformage (34) vue dans le sens de coupe présente une surface annulaire extérieure (36) se rétrécissant de façon conique et une surface annulaire intérieure (38) adjacente à la précédente qui se rétrécit de façon concave.

4. Outil de découpage selon la revendication 3, **caractérisé en ce que** le rayon de courbure de la surface annulaire intérieure (38) dans le sens de coupe est au moins inférieur à l'épaisseur de paroi, de préférence inférieure à la moitié de l'épaisseur de paroi du bord de la pièce délimitant l'ouverture (21).

5. Outil de découpage selon l'une des revendications 2 à 4, **caractérisé en ce que** le dispositif de chauffe (12) présente un élément de chauffe électrique (40) qui est logé dans un perçage axial (42) d'une tige (28) du poinçon (10) faisant corps avec l'élément de coupe (26) par le biais de l'épaulement annulaire (34).

6. Outil de découpage selon l'une des revendications 1 à 5, **caractérisé en ce que** le dispositif de chauffe (12) présente une sonde de température en contact thermique avec la surface de thermoformage (34) et un régulateur de température relié du côté de l'entrée à la sonde de température et du côté de la sortie à un élément de chauffe (40) chauffant la surface de thermoformage (34).

7. Outil de découpage selon l'une des revendications 1 à 6, **caractérisé par** un renfoncement (56) réalisé sur la face frontale libre du poinçon (10), duquel fait saillie dans le sens de coupe une arête de coupe (30) formant le tranchant (24) du poinçon (10).

8. Outil de découpage selon l'une des revendications 1 à 7, **caractérisé en ce que** la pièce (20) peut être appuyée contre la matrice de découpage (14) par une plaque serre-flan (16), sachant que la plaque serre-flan (16) est fixée sur le poinçon (10) de manière à pouvoir coulisser dans certaines limites.

9. Outil de découpage selon la revendication 8, **caractérisé en ce que** le poinçon (10) peut passer à travers une ouverture transversale (58) de la plaque serre-flan (16) en vainquant la force d'au moins un ressort de rappel (68) précontraint, sachant que l'extrémité libre du poinçon (10) est située dans l'ouverture transversale (58) de la plaque serre-flan (16) au commencement de la course de travail.

10. Outil de découpage selon la revendication 8 ou 9, **caractérisé en ce que** le poinçon (10) présente une bride (29), **en ce qu'**au moins trois douilles de guidage (60) réparties en direction du pourtour de la bride (29) et montées sur cette dernière avec une mobilité limitée dans la direction axiale du poinçon (10) sont fixées sur la plaque serre-flan (16), et **en ce que** des ressorts hélicoïdaux de pression (68) entourant les douilles de guidage (60) sont précontraints entre la bride (29) et la plaque serre-flan (16).

11. Outil de découpage selon l'une des revendications 1 à 10, **caractérisé par** un bloc à colonnes (18) qui présente une plaque de fixation (52) stationnaire portant la matrice de découpage (14) et une plaque de pression (48) pouvant effectuer une course par rapport à la plaque de fixation (52) et portant le poinçon (10).

12. Procédé pour perforer des pièces en matière thermoplastique, selon lequel la pièce (20) est immobilisée entre un poinçon (10) et une matrice de découpage (14) d'un outil à découper et le poinçon (10) est mis en prise après une course de travail avec la matrice de découpage (14) pour pratiquer une ouverture (21) dans la pièce (20), sachant qu'une surface de thermoformage (34) du poinçon (10) faisant saillie transversalement par rapport au sens de découpage est chauffée par un dispositif de chauffe (12), **caractérisé en ce que** la surface de thermoformage (34) qui est éloignée du tranchant (24) dans le sens opposé au sens de découpage est pressée à la fin d'une course de travail contre l'arête (22) de l'ouverture (21) qui est tournée vers elle, sachant que l'arête (22) est façonnée conformément au contour de la surface de thermoformage (34).
